# EUROPEAN PATENT APPLICATION

(11) **EP 0 633 536 A1**
(43) Date of publication of application: **11.01.1995**
(21) Application number: 93480095.4
(22) Date of filing: 09.07.1993
(51) Int. Cl.: G06F 17/00

(54) **Diagnosis method and system for predictive machine maintenance**

(71) Applicant: International Business Machines Corporation, Armonk, N.Y. 10504 (US)
(72) Inventor: Corrieu, Jean-Michel, F-34130 Saint-Aunes (FR)
(74) Representative: de Pena, Alain

(57) **Abstract**

The system has at least one physical parameter the value of which contains information about the operating condition of a machine (1). The system includes :
a) sensor means (2) for monitoring a set of parameters representative of the operation of said physical system and for acquiring a set of analog and/or digital raw data based on said parameters;
b) computation means (3) to which said analog and/or digital values are supplied and on which at least one mathematical function is performed, whereby at least one vector of values representative of the processed raw data is generated;
c) diagnosis means (4) in the form of a neural network using said vectors of values in order to generate a diagnosis representative of the operative condition of said machine.

## Description

### Field of the invention

The present invention relates to machine diagnosis and maintenance in general, and more particularly to a diagnosis system and method for the purpose of predictive machine maintenance.

### Background

It is currently believed inevitable that no matter how perfectly designed or well built a machine is, it is going to suddenly break down some day or the other during the course of its operation.

At the same time, it is also feared that today's economical environment does not allow a business of any kind to afford non-availability of its machines, and makes it desirable to be able to avoid such sudden break-downs. The need is particularly sharp for example in the case of equipment tools in a manufacturing line.

Several methods have been put in place in the past to try to improve on site machine availability, besides improving quality of the machines themselves.

One such method, the most ancient one in fact, consists in waiting for a machine or a piece of equipment to break down, and to identify and replace the faulty part. This method disregards the possibility of predicting a breakdown, and can be justified only when the economic impact of a breakdown is minor, or when the faulty equipment can be replaced very rapidly, which is not often the case.

Another such method consists in replacing certain parts of a machine or a larger assembly before these parts break down, based on an estimate of the likelihood of their breakdown in the near future. Since such estimates are difficult to ascertain, maintenance crews tend to replace parts too early, and therefore this method has a tendency to generate substantial downtime of machines to which it is applied, and to drive repair costs up. This method should be applied only in instances where the damages of potential machine failure outweigh the cost of additional downtime or the cost of parts.

According to a third known method called predictive maintenance, the occurrence of the failure of a part of a system in the near future is being predicted, using the analysis by a human expert of one or several parameters of the system to which the method is applied. However, the time needed to acquire a set of data representative of the monitored parameters, and even more, the limited availability of the expert, lead to a prediction which is essentially delayed, and off-line.

Therefore, predictive maintenance of the known type is unacceptable in systems having a large number of parameters which can change rapidly over time and need to be monitored and interpreted.

"Expert systems" used in lieu of the human expert have attempted to solve the above drawbacks, but they are based on linear algorythms and have widely failed to constantly provide a secure solution to the problem of machines becoming suddenly idle because of a malfunction.

### Objects of the invention

It is therefore an object of the present invention to provide a method of diagnosis and predictive machine maintenance preventing any sudden breakdown of said machine.

It is a further object of the invention to provide a system for implementing said method, and more specifically such a system which enables continuous monitoring of the operating performance of a machine, and instant decision-making according to said performance, with an accuracy equal or superior to that of a qualified technician or expert.

It is a still further object of the invention to provide such a system which relies on on-line non-linear processing of carefully selected signals obtained from the monitored machine, in order to analyze the operating performance of the machine, combine results in a non-linear fashion in order to generate a global diagnosis of the machine operating condition and decide on the appropriateness and timing of a maintenance stop of the machine.

It is a still further object of the invention to provide such a system capable of continuous learning based on the occurrence of new events not yet encountered during its previous operation.

### Summary of the invention

These objects are achieved by the method and the system as defined in the appending claims, as summarized below.

The method according to the invention for diagnosing the operating condition of a physical system having at least one physical parameter the value of which contains information about the operating condition of said physical system is characterized in that it comprises the steps of:
a) for each of said at least one parameter, applying a set of at least one mathematical function representative of the operative condition of the physical system to said at least one physical parameter;
b) determining a set of classes of values of said at least one mathematical function, each said class of values corresponding to a predetermined operating condition (e.g. GOOD; BAD; UNDETERMINED) of said physical system;
c) in a learning mode, memorizing said set of classes of values into the memory of a diagnosis system whereby the latter is being taught by way of example the correspondance between said classes of values and said operating conditions;
d) in a monitoring mode, acquiring over a period of time a set of raw data of said at least one physical parameter and computing vectors of values of said at least one mathematical function based on said raw data, then supplying said vectors as inputs to said predictive maintenance system, whereby the latter classifies said values according to said classes and produces a diagnosis of the actual operating condition of the physical system, in the form of an output message.

According to additional features of the method of the invention:
- it includes the step of displaying a warning message based on said diagnosis, said message being used to schedule a maintenance operation of the physical system.
- said set of at least one mathematical function includes the function consisting in calculating the maximal and minimal values of said set of raw data, said maximal and minimal values being used to compute vectors of values to be used by the diagnosis system.
- said set of at least one mathematical function includes the function consisting in sampling an analog signal representative of the raw data, the samples being used to compute vectors of values to be used by the diagnosis system.
- said set of at least one mathematical function includes the function consisting in calculating a Fast Fourier Transform (FFT) of the set of raw data, the coefficients of said FFT being used to compute vectors of values to be used by the diagnosis system.
- each said vector includes 16, 72 and 72 values respectively.
- said diagnosis system includes a neural network which is being taught the correspondance between output message classes and input vectors of values, said vectors of values being scaled according to the useful input range of said neural network and applied to its inputs, whereby said neural network generates an output message representative of the operating condition (good; bad; undetermined) of said physical system.
- during monitoring mode, said diagnosing system generates specific warning messages whenever a vector cannot be classified and prompts a user to provide a manual classification of the physical system's operating condition and memorizes this manual classification, whereby said diagnosing system enriches its knowledge base.

The diagnosis system according to the invention for diagnosing the operating condition of a physical system having at least one physical parameter the value of which contains information about the operating condition of said physical system, is characterized in that it includes:
a) sensor means for monitoring a set of parameters representative of the operation of said physical system, said sensor means being coupled to acquisition means for capturing a set of analog and/or digital raw data based on said at least one physiscal parameter;
b) computation means to which said analog and/or digital values are supplied and on which at least one mathematical function is performed, whereby at least one vector of values representative of the processed raw data is generated;
c) diagnosis means using said vectors of values in order to generate a diagnosis representative of the operative condition of said machine.
According to additional features of the system of the invention:
- said diagnosis means includes at least one neural network software to which said vectors are input, said vectors being processed by the neural network so as to generate a classified output message indicative of a diagnosis of the operating condition of the physical system being monitored.
- said neural network is of the Restricted Coulomb Energy type.
- said computation means includes a personal computer system comprising data acquisition cards plugged to its data bus, and a central processor and memory where the neural network software operates.
- the system further includes display means connected to said central processor, providing for user interaction with the system and display of the diagnosis output by the neural network software.

The invention will be better understood from the following detailed description read in conjunction with the following drawings, in which:
Figure 1 represents a bloc diagram of the steps of the diagnosis method according to the invention;
Figure 2 represents a bloc diagram of the main elements of the predictive machine maintenance system for implementing the method according to figure 1;
Figure 3 schematically represents the processing of a signal obtained from the machine being monitored, in order to obtain vectors containing critical information about the machine's operation;

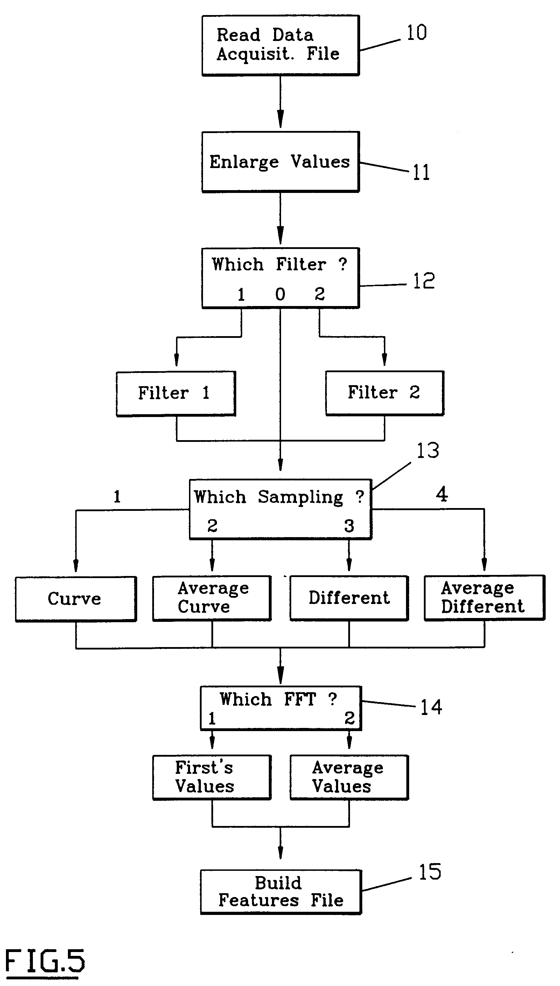

Figure 4 represents a general view of the Personal Computer system on which the diagnosis method according to the invention can be operated;
Figure 5 represents a diagram of the features extraction step of the diagnosis method according to the invention;
Figure 6 represents a more detailed diagram of the steps of the method according to the invention, in a normal training mode;
Figure 7 represents a more detailed diagram of the steps of the diagnosis method of figure 1, during monitoring mode.

### Detailed description of the invention

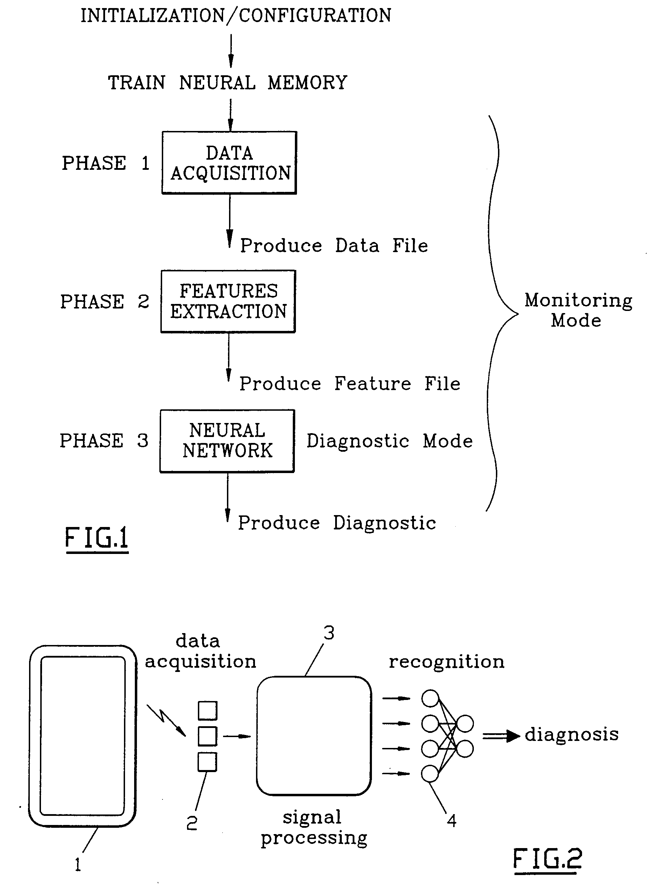

Figure 1 illustrates the main stages of the diagnosis and predictive maintenance method according to the invention.

First of all, the system for implementing the method needs to be initialized and configured according to the characteristics of a machine or process to be diagnosed. Initializing the system means entering and storing the number of sensors that are being connected between a machine part and the diagnosis system, and the allocation of the various sensors (figure 2) to the various parts of the machine or the process subject to diagnosis.

Further, the number of values that the a dedicated user application program has to acquire from each sensor and the format of both the digital and analog signals acquired need to be specified. Such an acquisition program is however known per se. Also, since each vector of values should be classified, diagnosis classes need to be defined and labels for these classes need to be memorized by the diagnosis system memory, i.e. the neural network memory, as explained farther. Such labels may include "GOOD", "BAD", "UNDETERMINED", "ELEMENT X WILL BREAK SOON", etc, depending on the complexity of the physical system and on the resolution of the neural network, i.e. its ability to distinguish different outputs based on the input vectors.

Of course, the classes can be customized by the user and saved for the purpose of diagnosing a particular physical system or a type of machines.

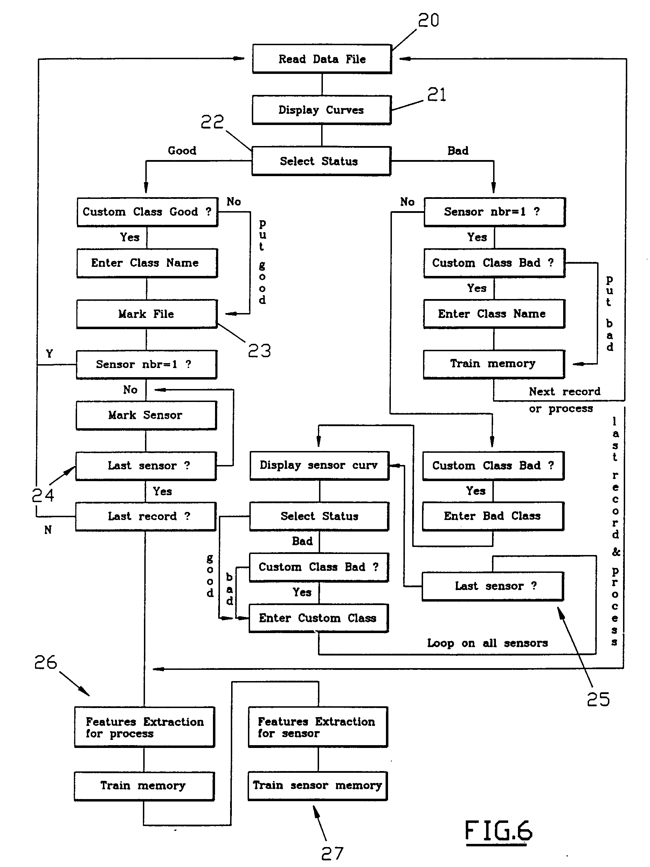

In a subsequent phase, or training phase, the neural network is fed vectors that a technician classifies across a plurality of possible machine conditions, such as a GOOD or FAIL status, for example. The neural network makes up its knowledge from the several to many examples that are being proposed to it, as illustrated in the flow diagram of figure 6.

In figure 6, starting with a training data file 20, curves corresponding to said data are displayed on a computer system, as in 21. Based on the curves, an expert technician classifies (at 22) the subject data into a "GOOD" category or into a "BAD" category, based on his expertise. If the custom classes are not labeled "good" and "bad", a means is provided to classify the data differently with custom labels, at 23. In each of the loops 24,25, similar classification is performed for all the sensors pertaining to the machine that is being diagnosed. Subsequently, at 26, the high level features are extracted from the classified data, for all the sensors of each process or part of a machine, and for all the processes. Subsequently, at 27, the vector values corresponding to the high level features are stored into the neural network memory, whereby the neural network is trained.

If an unknown type of vector is input, RCE neural networks offer the possibility to generate an undetermined output and to emit a warning signal in that case. This gives the expert the opportunity to diagnose the status of the machine by himself at this point. The corresponding classification of the event is stored into the neural network memory, thereby enriching its knowledge base. A further occurence of a similar vector value will be taken into account by the diagnosis system in the same way the expert did.

Once trained, the system (which might comprise several neural networks) is able to enter into diagnosis or monitoring mode, and to perform non linear classification on several hundreds of characteristics of acquired signals, if needed.

During the first step of the monitoring phase (phase 1 in figure 1), the diagnosis system acts like a "stethoscope", in that it starts to acquire relevant data that are available on a machine or set of machines to which the predictive maintenance method is being applied. Relevant data designate data that correspond to the monitoring of a set of physical parameters the evolution of which a human expert would believe to have some predictive power as to the future condition of the machine, (i.e an upcoming failure, or in the contrary, continued satisfactory operation). The data acquired are used to build a data file that can be used for subsequent computer processing.

It is to be noted that the method according to the invention is not limited by a certain type of parameters of the machine or process, and any parameters can be suitable as long as they have some relationship with the condition of the machine at hand.

Therefore, the method can be adapted to any type of machine or physical repetitive process, and the parameters used in each case can easily be determined by the man skilled in the art corresponding to said machine or process.

Thus, non limitative examples of physical parameters for which data are acquired according to step 1 of the method include: temperature, pressure, vibration level, acceleration, radiation, or any other parameters existing in the machine or in parts of the system to which the predictive maintenance method is applied.

According to a second step (phase 2 in figure 1) of the predictive maintenance method in its monitoring mode, the data that were extracted during step 1 are analyzed in order to extract from this raw data a set of features or high level characteristics that are more specifically related to the operating condition of the monitored machine, or the correlation of which features has some predictive power as to said operating condition.

These features, as explained in greater detail later, are obtained by processing the raw data according to one or several mathematical functions. The set of such functions that is best suited for use with a particular physical system is a matter of choice by a technician skilled in understanding how said physical system operates.

Although many hundreds of mathematical functions are theoretically available for use in the features extraction phase, in the rest of the specification it will be referred to three functions often used in the method, without any limitation on the scope of the invention. The three functions are: Min/Max value of a set of values; sampling of a curve; Fast Fourier Transform (FFT) of a set of values.

Therefore, the use of such functions for extracting high level features from a data file obtained during the acquisition step will be clarified by way of an example.

For instance, if the operating condition of a robot arm is to be monitored, the technician may decide that one parameter of importance for diagnosis purposes and in an attempt for predictive maintenance, would be the instant acceleration to which the arm is submitted.

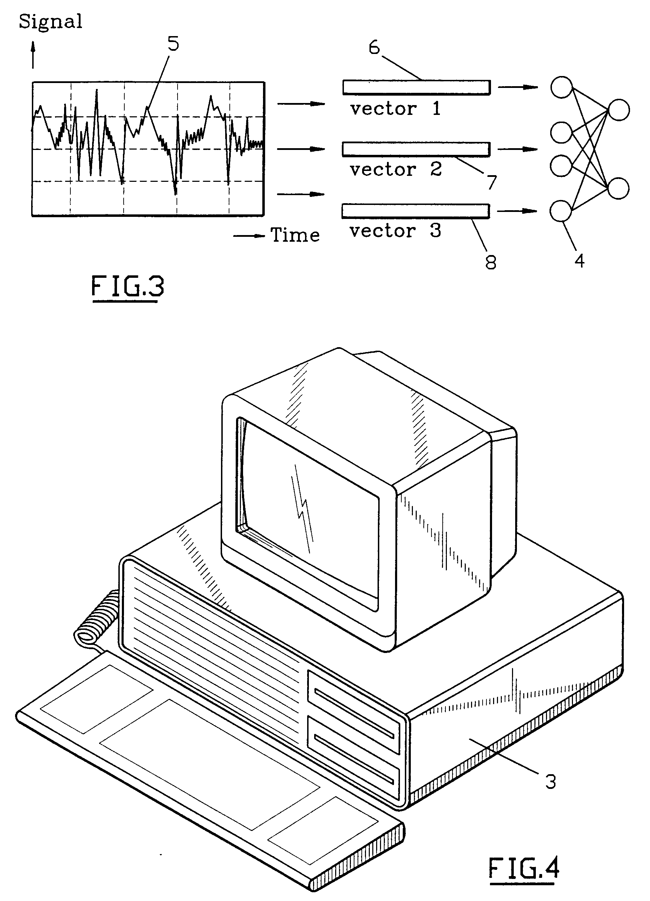

The acquired acceleration signal is represented in Figure 3, as a function of time.

In Figure 3, a total of three different features of the acceleration signal as a function of time are being extracted, using three different mathematical functions. This yields three different vectors 6,7,8 of values corresponding to the extracted features of the initial raw data.

The first vector 6 contains a set of minimal and maximal values of acceleration in consecutive time intervals.

In one embodiment of the invention, vector 6 contains 16 values, each of which is coded over 8-bit words for example, if the neural network accepts bytes. The 16 values are supplied as inputs to the neural network 4. Similarly, the second vector 7 contains a random sampling of the acceleration parameter, over 72 samples, according to one embodiment. And the third vector 8 contains the values of the 72 first coefficients of a FFT applied by computer 3 to a set of 1000 data points on the acceleration vs time curve.

Again, the above example is in no way meant to be limitative, and based on the present invention, the man skilled in the art could determine hundreds of mathematical functions, depending on the parameters that are being chosen to monitor the system and subsequently processed.

Additional examples of useful functions in the field of predictive maintenance are : sampling or filtering of the data obtained from sensing parameters, or computing statistics based on said data.

The exact choice of an extraction function is made by the user of the diagnosis system, using an interface program associated to it. Such a program is easily constructed to provide the user with a succession of screens of a display, whereby the user is prompted (for instance through screen menus) to select particular functions.

Figure 5 represents a diagram giving an indication of how the selection among several mathematical functions is made. In 10, the system retrieves the data file available after the acquisition step (figure 1). In 11, the data are enlarged or resized in order to match the numerical input range of the neural network, otherwise the non-linear combination of vectors by the neural network would not give the right relative weight to an under- or over-sized vector value. In 12, the user is used. In 13, the user is asked to choose among four different sampling functions to be applied to the acquisition data file. Similarly, in 14, the user is asked to chose among two different FFT functions.

Based on these selections, the chosen functions are used to process the acquisition data file, whereby a features file containing a series of vector values representative of the signals sensed by the sensors, is obtained.

The outcome of such processing is at least one vector (as shown in figure 3) of values describing the condition of the machine at a given time or over a period of time.

Of course, the vectors describing said features can be produced at a high enough frequency to enable continuous monitoring of the machine condition, and said frequency can easily be determined by the man skilled in the art pertaining to the technical field at hand.

According to a third step (phase 3 in figure 1) of the method of the invention, the vectors of the feature file are supplied as an entry to the input layer of a diagnosis system, preferably implemented in the form of a neural network 4.

The neural network produces a diagnosis of the machine condition, based on the vectors of the feature file.

A neural network is an information processing structure modeled after the function and physiology of cells of the human brain (neurons).

The diagnosis is output in any form that can be interpreted by a technician, for exemple in the form of a message displayed on a computer display. Typical output messages depend on the type of neural network that is being used and on the classes of outputs or messages which have been stored.

When a neural network of the "classifier" or RCE type is used, the output will be in the form of a message "GOOD" or "BAD", or similar. This means that the classifier interprets the input vectors as being similar to vectors that correspond to a normal (GOOD) or abnormal (BAD) operating condition of the monitored machine or tool.

Of course, according to neural network theory, these kind of outputs can only be generated during the monitoring mode, provided the neural network has previously been taught what "GOOD" and "BAD" means in terms of the input vectors. Such teaching is done in training phases preliminary to the use of the system in supervision mode, as explained in relation to figures 1 and 6.

According to one implementation of the diagnosis method and system according to the invention, a neural network software by NESTOR LEARNING SYSTEMS is used. But similar neural networks of other suppliers could similarly be employed.

The neural network by NLS is a general purpose neural network, of the classifier type. It emulates the biological processes of the brain to solve pattern-recognition problems, as such processes have demonstrated their capability to solve very complex pattern classification problems with ease, develop these solutions independently and survive the destruction of some of the processing elements.

Such capabilities are therefore transfered by NLS into pattern-recognition solutions on a computer to be utilized with a user's own application software. An example of such an application program is enclosed herewith as Appendix A.

The NLS of Nestor Inc. is primarily used to recognize and classify patterns. It accomplishes this by learning to organize solutions from experience and by being able to generalize so that noise and random data can be tolerated. Briefly stated, such a neural network is an information-processing system composed of a large number of interconnected processing elements, that learns pattern classes and stores this learned knowledge into a memory, along with the configuration of the network. The system has a recognizer that classifies input patterns into recognizable categories by comparing features of the new patterns to the features of the patterns used when it was trained. Training only involves presenting classified patterns to the network.

For the sake of the present specification, a "pattern" should be understood as any collection of measurable inputs such as the ones incoming from sensors 2, or such as the vectors obtained by mathematically processing the collection of inputs, using computer 3, as explained above.

"Pattern Recognition" should therefore be understood as the process of association of a particular set of measurable inputs with a class label, such as "good", "bad", or, in line with the present invention: "element x of machine y needs replacement".

It should be noted that the set of inputs needs not represent independent measures but could be a temporal pattern, i.e. a repeated measure of the same input source at specific time intervals, as the acceleration parameter in figure 3.

A "feature" represents any single measurable or computable characteristic of a pattern, such as the computed maximal/minimal values of the pattern, its sampling or a Fast Fourier Transform of it. A "feature vector" is a collection of features that completely describes a pattern. Thus any pattern whose characteristics or properties can be measured and then represented as a set of numerical values is a potential subject for classification by NLS. But recognition performance of the system is directly related to the quality of the feature set selected : the feature set selected must include sufficient critical information about the input patterns to permit NLS to both distinguish between similar but distinct classes and to identify a range of input patterns as belonging to the same class.

"Feature extraction" will thereafter be the activity of the development of a set of feature values that completely describes a pattern, because although the raw pattern itself could be in principle presented directly to NLS, a much more efficient system can be obtained according to one aspect of the invention by extracting features which truly distinguish classes of interest to the operating condition of a monitored machine.

Additional background information regarding neural networks is available in the following references :
"Real-time 3-D object classification using a learning system", R. Rimey et al., Nestor Inc, in SPIE vol. 726 Intelligent Robots and Computer Vision, 1986.

"Learning System Architectures composed of multiple learning modules", D. L. Reilly et al., Nestor Inc., ne Richmond Square, Providence, RI 02906, U.S.A.

The full functionnality of NLS is integrated in the application using a set of C-callable NLS functions integrated into the user aplication mentioned above, which allows the the interfacing with the NLS neural network software.

The overall structure of a predictive maintenance system according to the invention will now be described in relation to figures 2 and 3.

In figure 2, a machine under monitoring 1 has certain of its components sensed by sensors 2 allowing signal acquisiton in a conventional computer 3 such as a PC/AT manufactured by the IBM Corporation (represented in figure 3). Data acquisition and feature extraction I/O cards are plugged into the computer bus (not shown).

In a preferred embodiment of the invention, the I/O cards are respectively of the DASD16 and PIO12 type from METRABYTE Corporation. These cards respectively allow the capture of analog and digital signals and their transmission to a computer processing unit where they are stored.

The computer 3 preferably runs a DOS 5.0 (from MICROSOFT Corporation) as well as a Nestor Learning System (NLS is a trademark of NESTOR Inc) neural network software illustrated at 4, which is an adaptive pattern-recognition software based on neural-network theory. The computer 3 also runs application software to provide an interface between the NLS neural network and the rest of the system.

The main functions provided by such an interface include defining the environment for the NLS neural network, i.e. defining the patterns and the classes in which they are to be classified, and defining output messages according to the classification of input vectors by the neural network. These functions per se are state of the art and need not be further described.

The selection of the components as well as the particular events triggering the starting time of acquisition, are defined by an expert technician, according to their ability to assess the actual "health" of the running machine. Analog or digital values of acquired signals are then processed according to known algorithms (derivative, integral, Fast Fourier Transform, etc...) and arranged in one or several vectors of signal characteristics, also called features. These vectors are then fed into the input layer of a neural network 4 of the Restricted Coulomb Energy or RCE type.

Therefore, the system is hooked to the operational machine 1, and continuously samples signals corresponding to a predetermined set of operation parameters, and decides continuously or upon user request on the global condition of the machine, allowing to detect early deviations in its behavior and to plan predictable maintenance actions on a need basis.

According to one embodiment of the invention, the system can also continue to learn during the monitoring mode. Therefore, whenever a set of input vectors leads to an undetermined classification, the diagnosis system generates a specific warning message on the computer screen, and prompts the user to provide a manual classification of the physical system's operating condition and memorizes this manual classification, whereby said diagnosing system enriches its knowledge base.

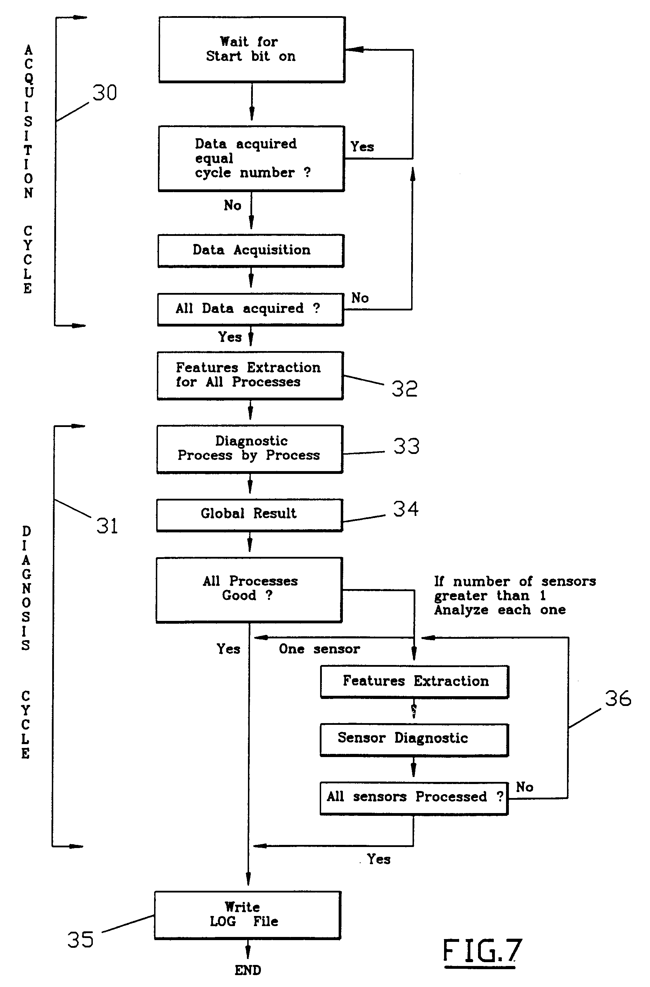

Figure 7 represents a summary of the steps of the diagnosis method in monitoring mode. Said mode is divided into two cycles, the data acquisition cycle, represented at 30, and the diagnosis cycle, represented at 31. The data acquisition cycle is performed as many times as there are processes or sensors (if there is one sensor per machine or process), times the number of data points expected from each sensor. At the end of data acquisition cycle 30, features are extracted of the data at 32, in the form of vector of values resulting form the mathematical processing of the data.

At 33, the processes or machines are diagnosed one after the other, which leads to a global result 34 delivered at 35 by the neural network software, in the form of an output file. A secondary loop 36 similarly analyzes the data provided by additional sensors, in case there are more than one sensor per machine or process.

It is to be noted that, due to the use of several neural networks trained in different fields for predictive maintenance purposes, the system and the method according to the invention allow the combination of the knowledge of a plurality of human experts in said different technical fields. For instance, for the diagnosis of an electro-mechanical machine or process, one neural network will be trained in electricity, and another one will be trained in mechanics. The final diagnosis output will be a global, non-linear assessment of the machine or process condition.

For all the above reasons, the method and system according to the invention provide for a significant progress in the field of predictive maintenance.

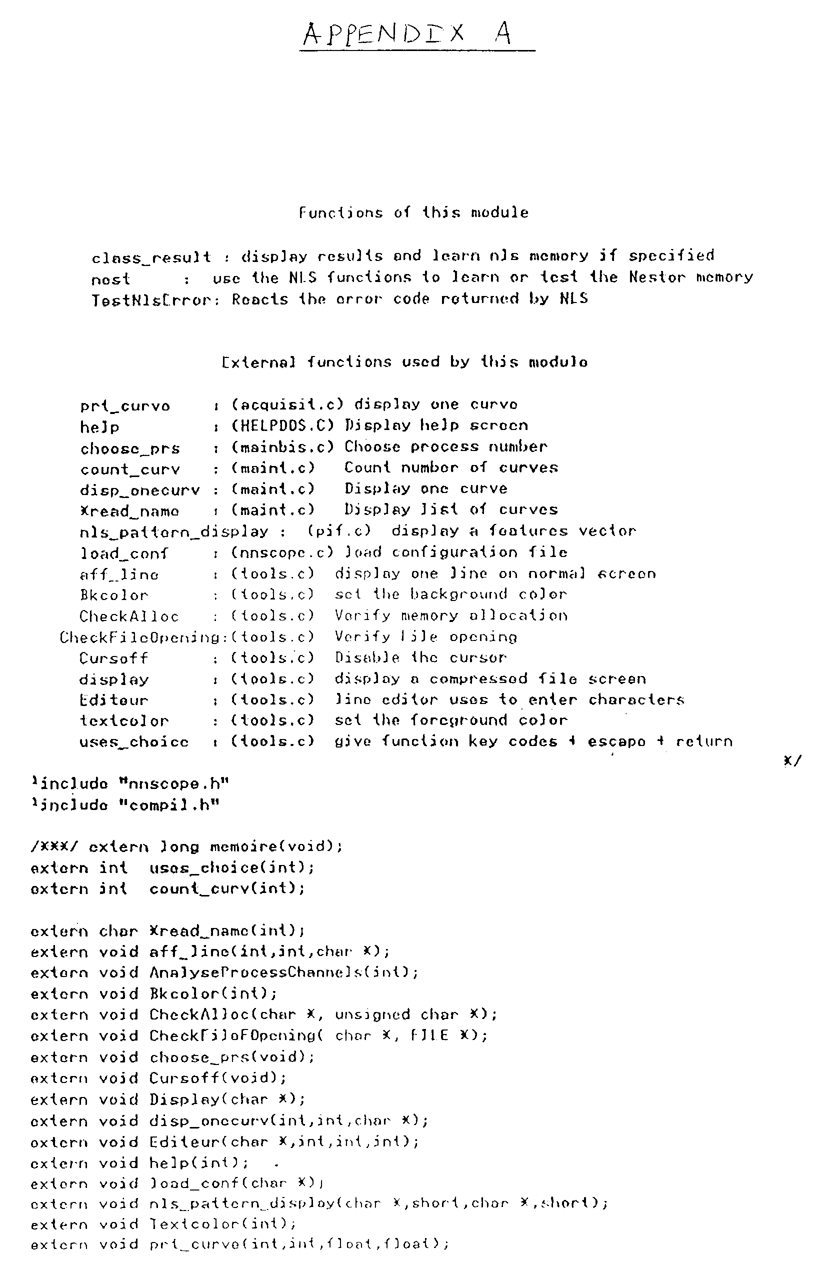

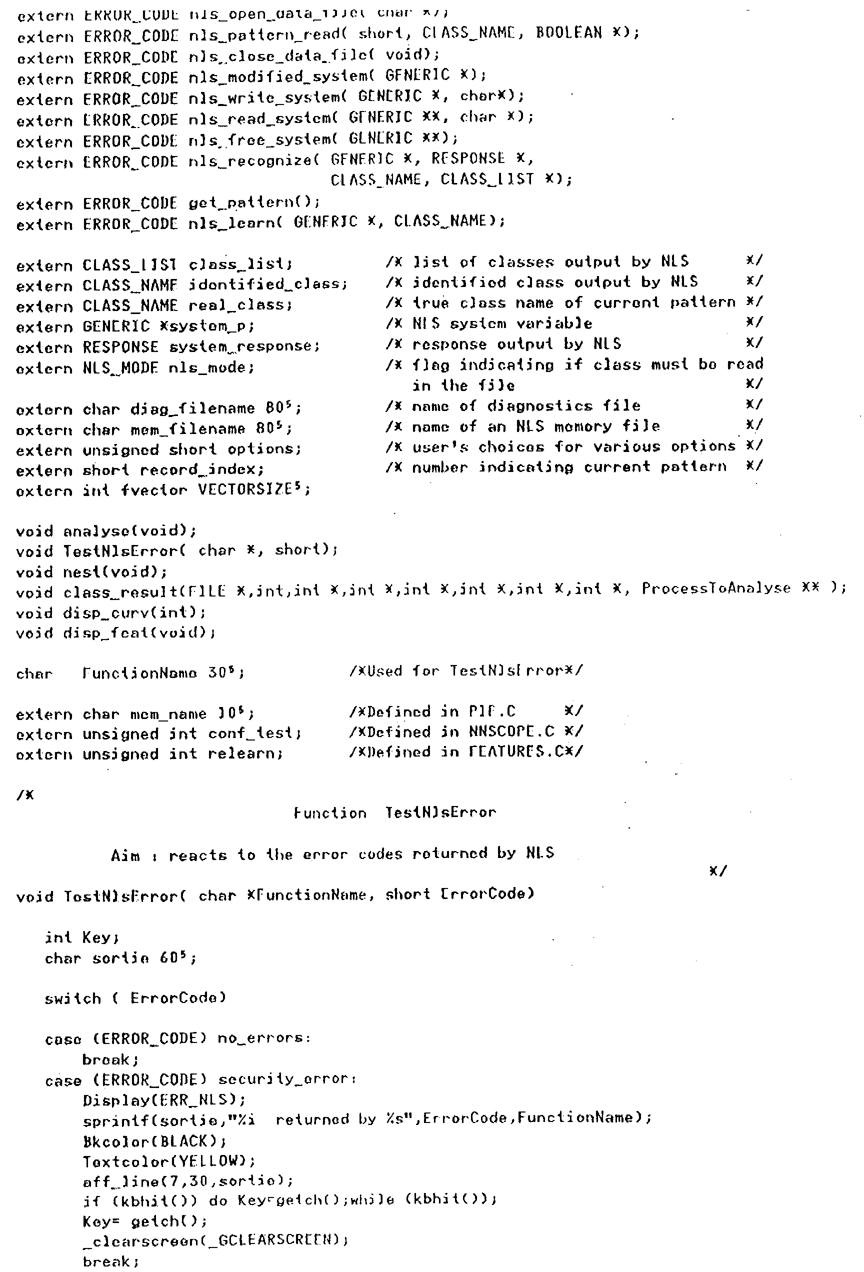

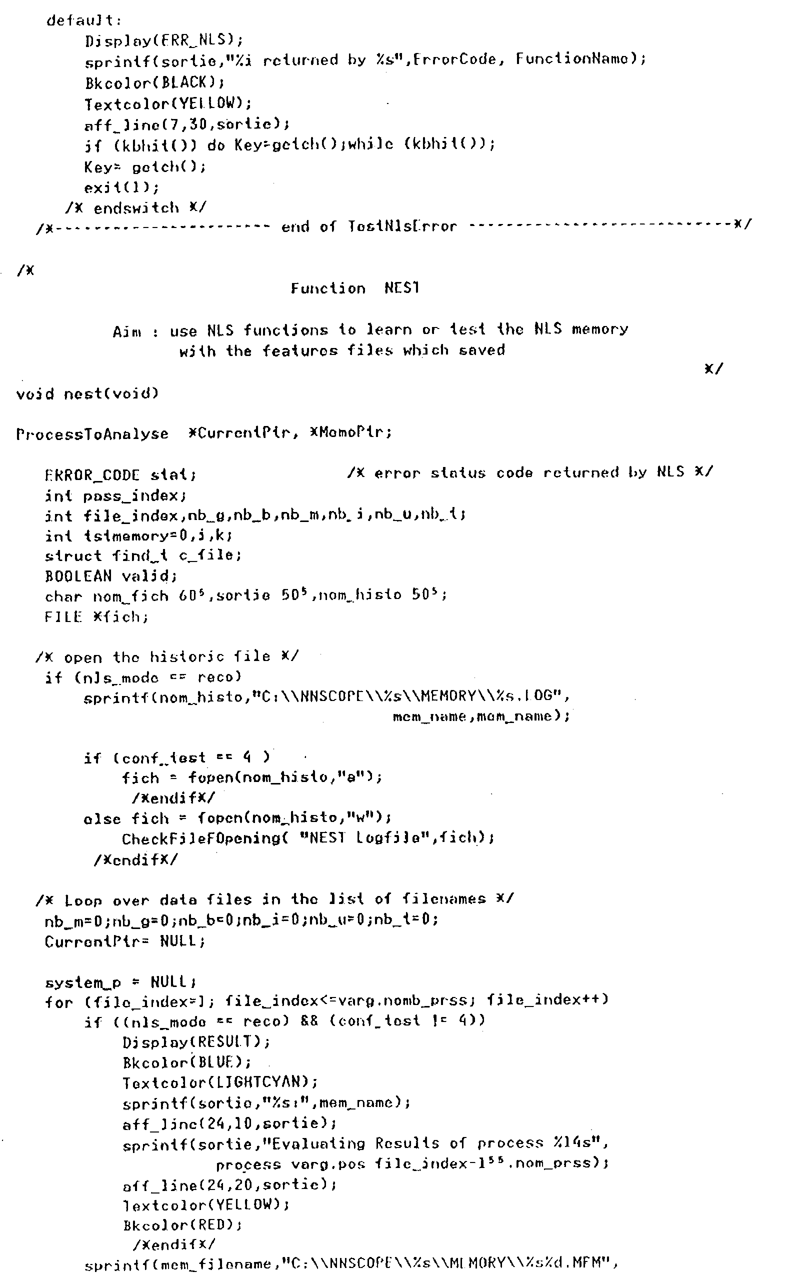

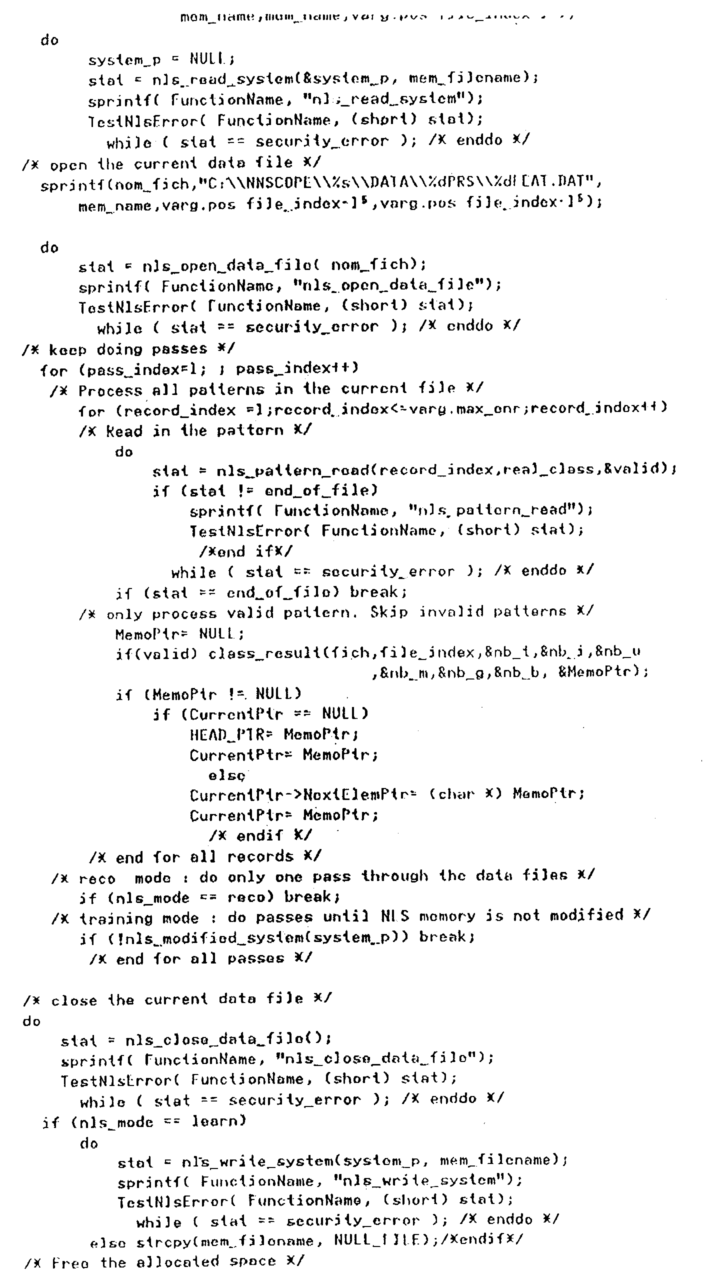

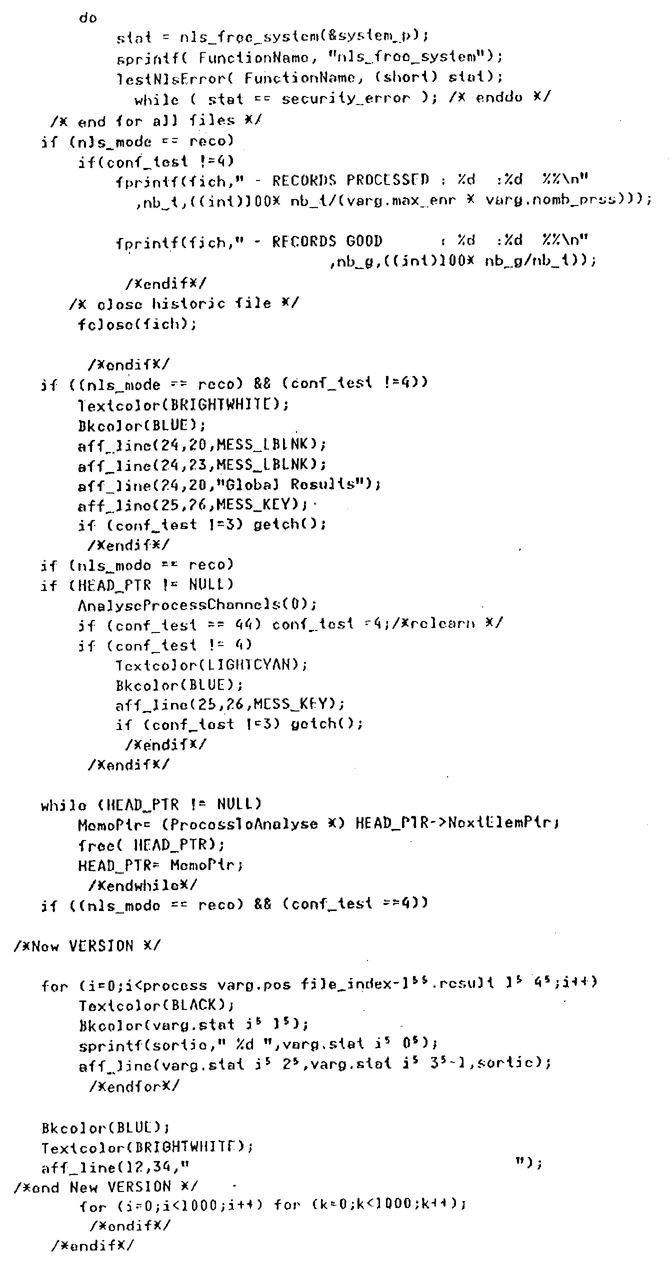

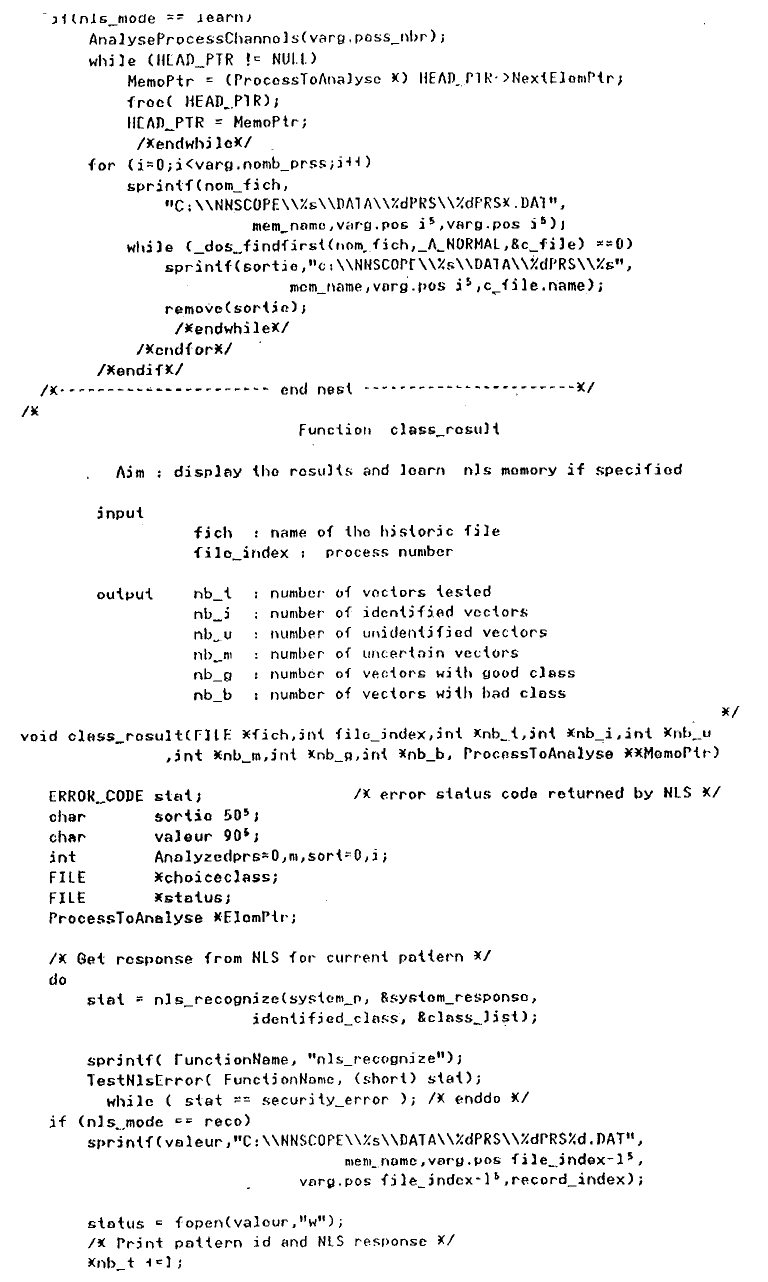

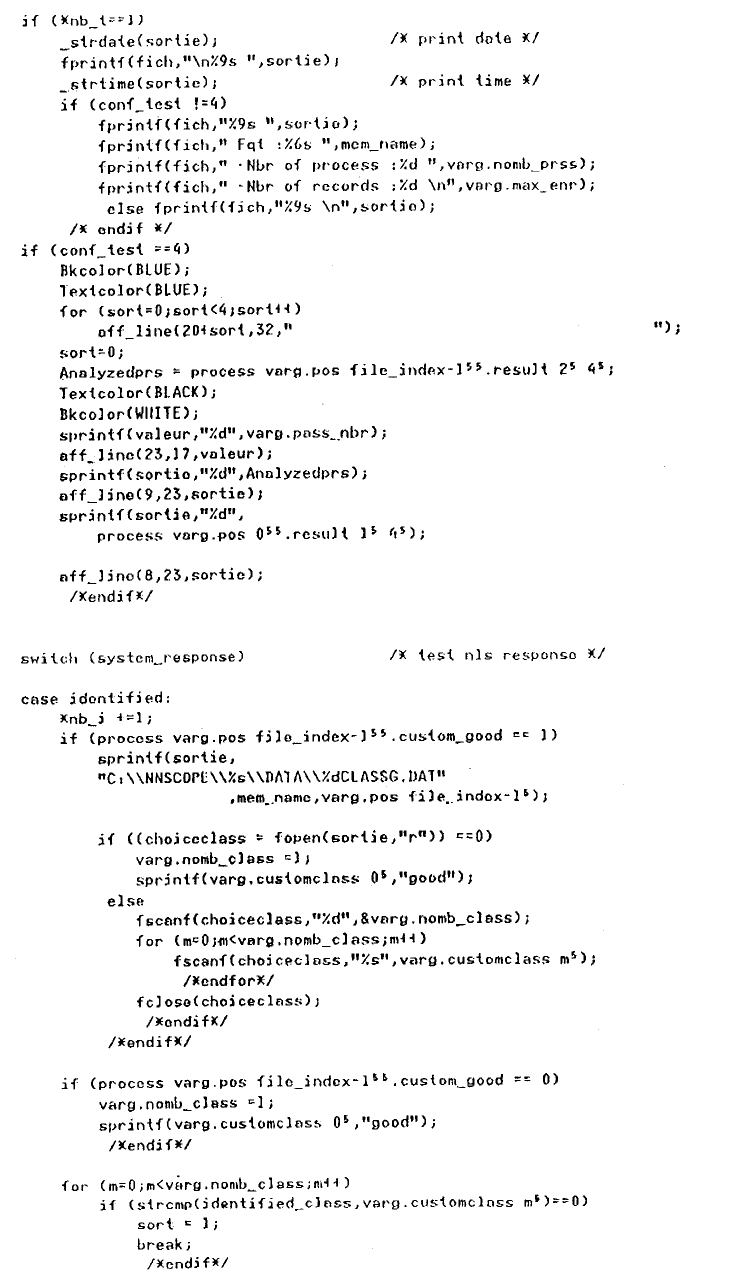

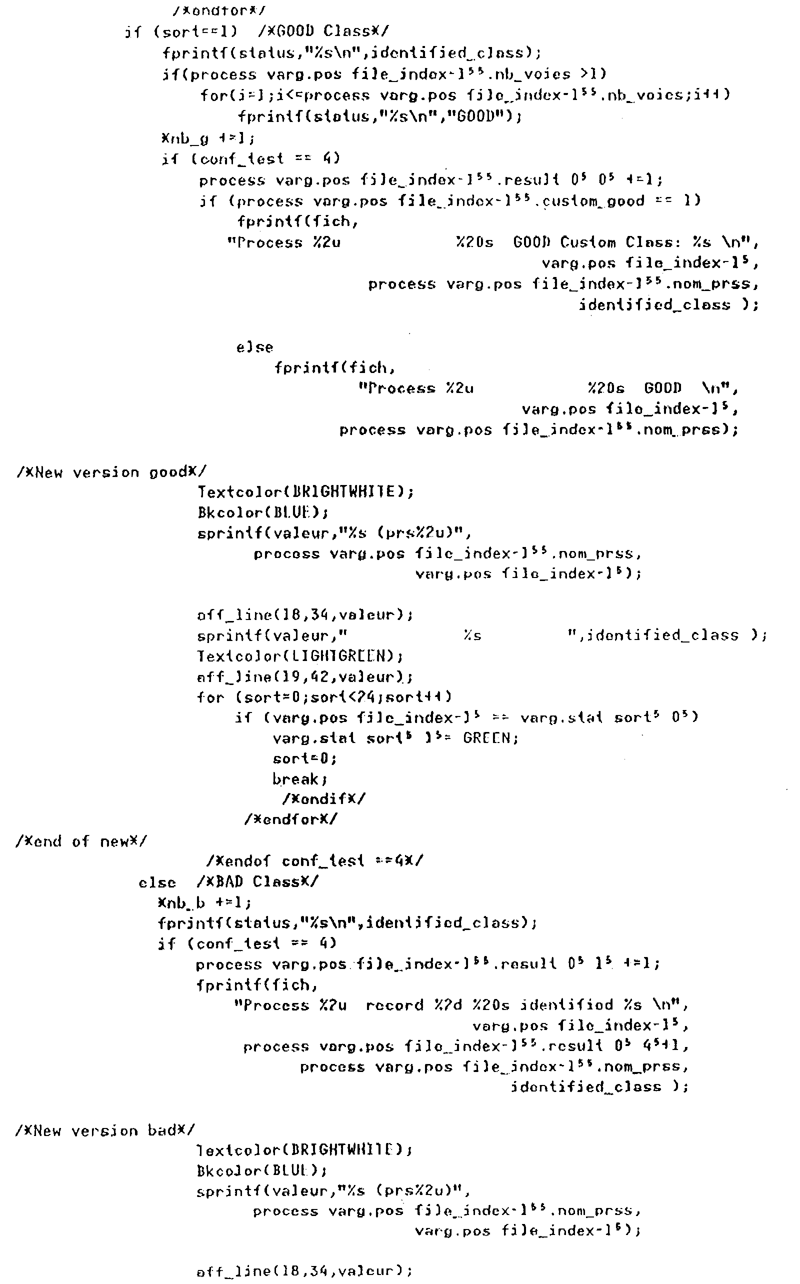

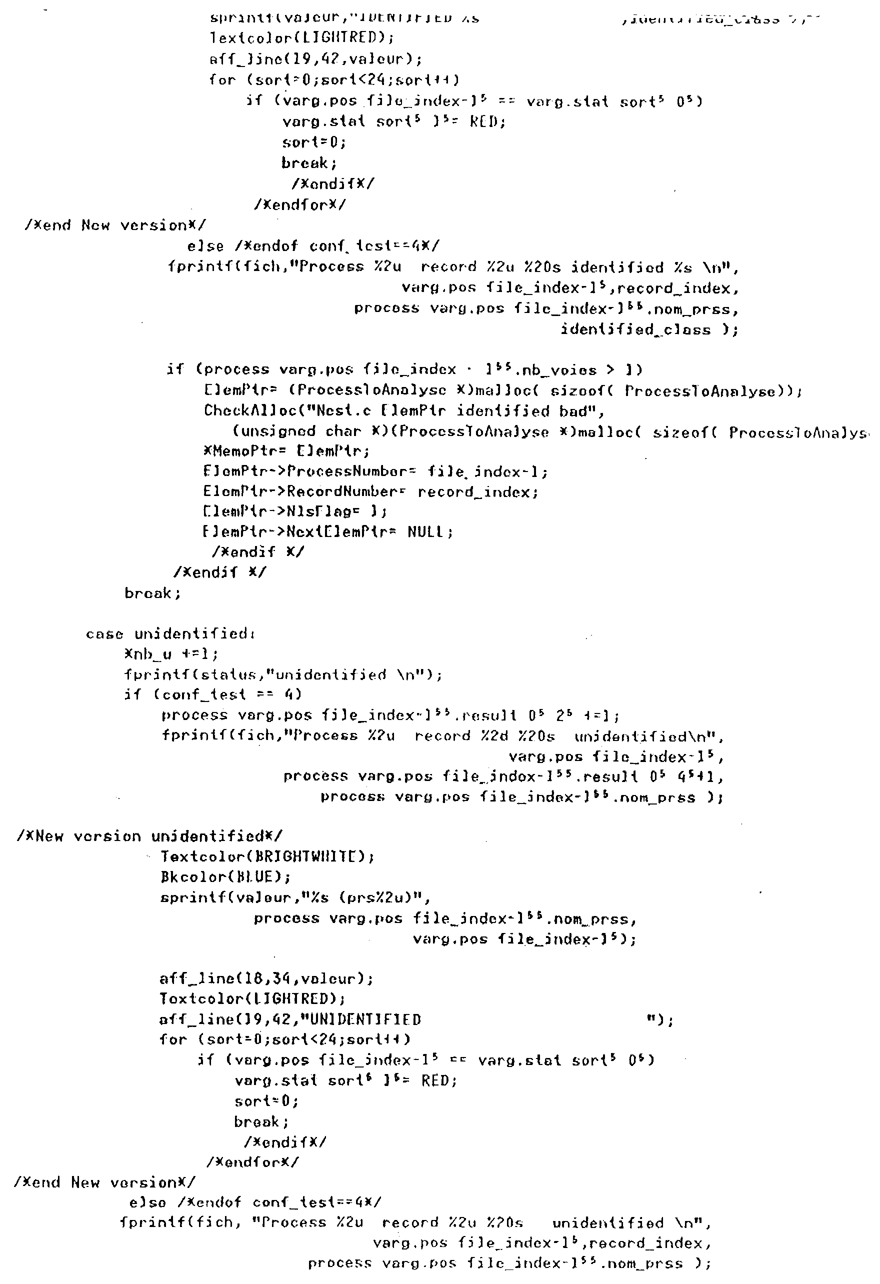

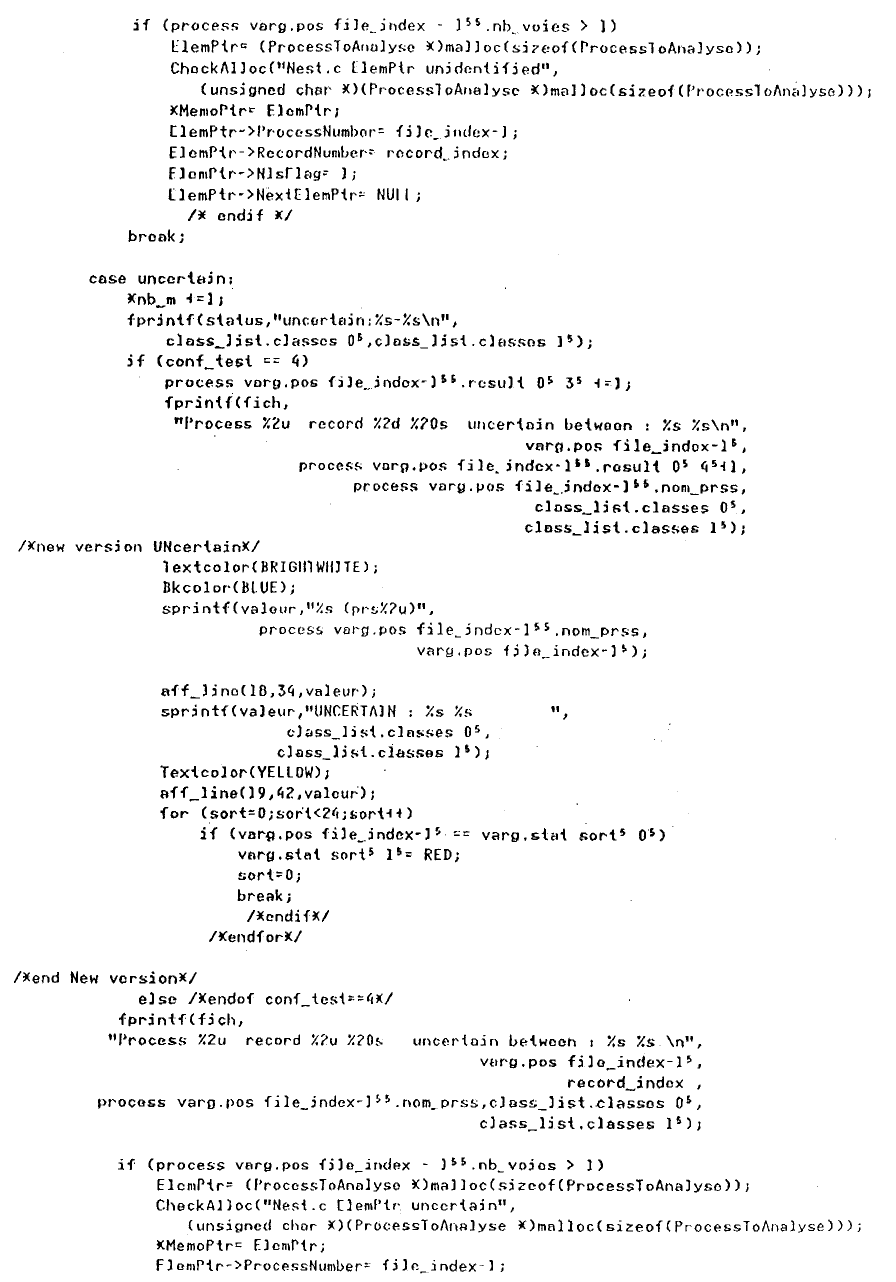

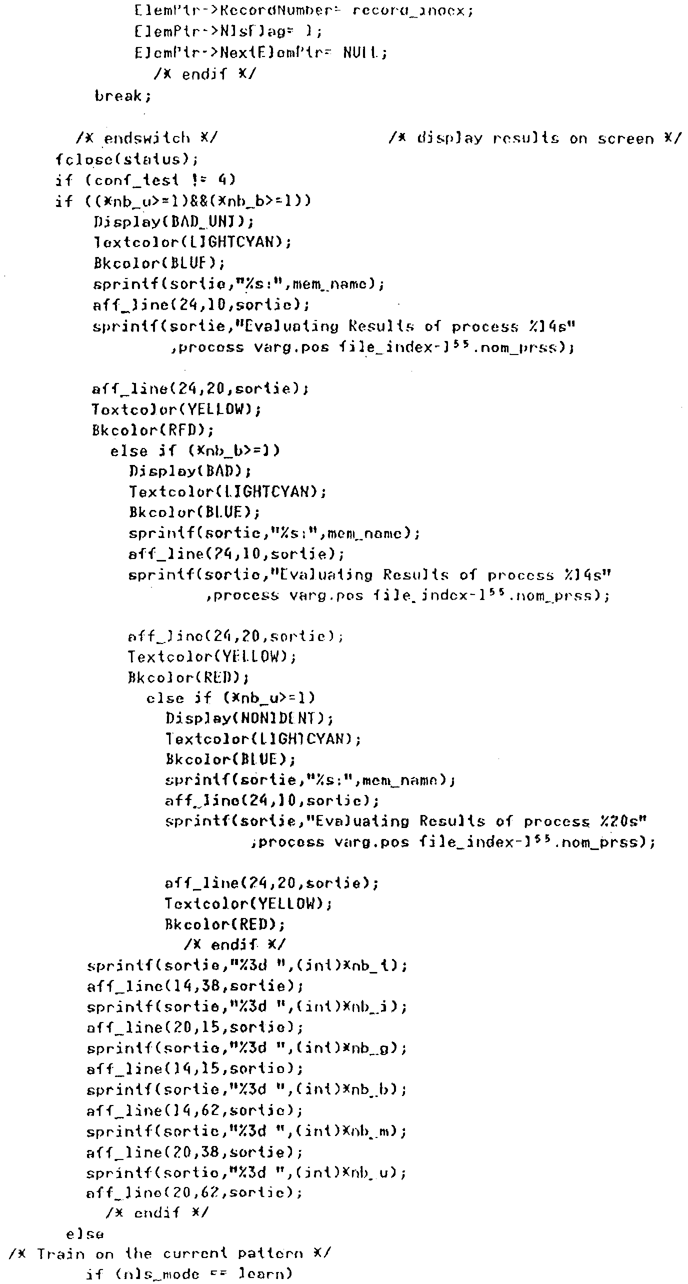

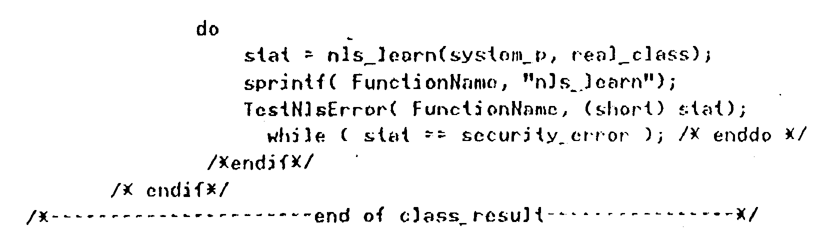

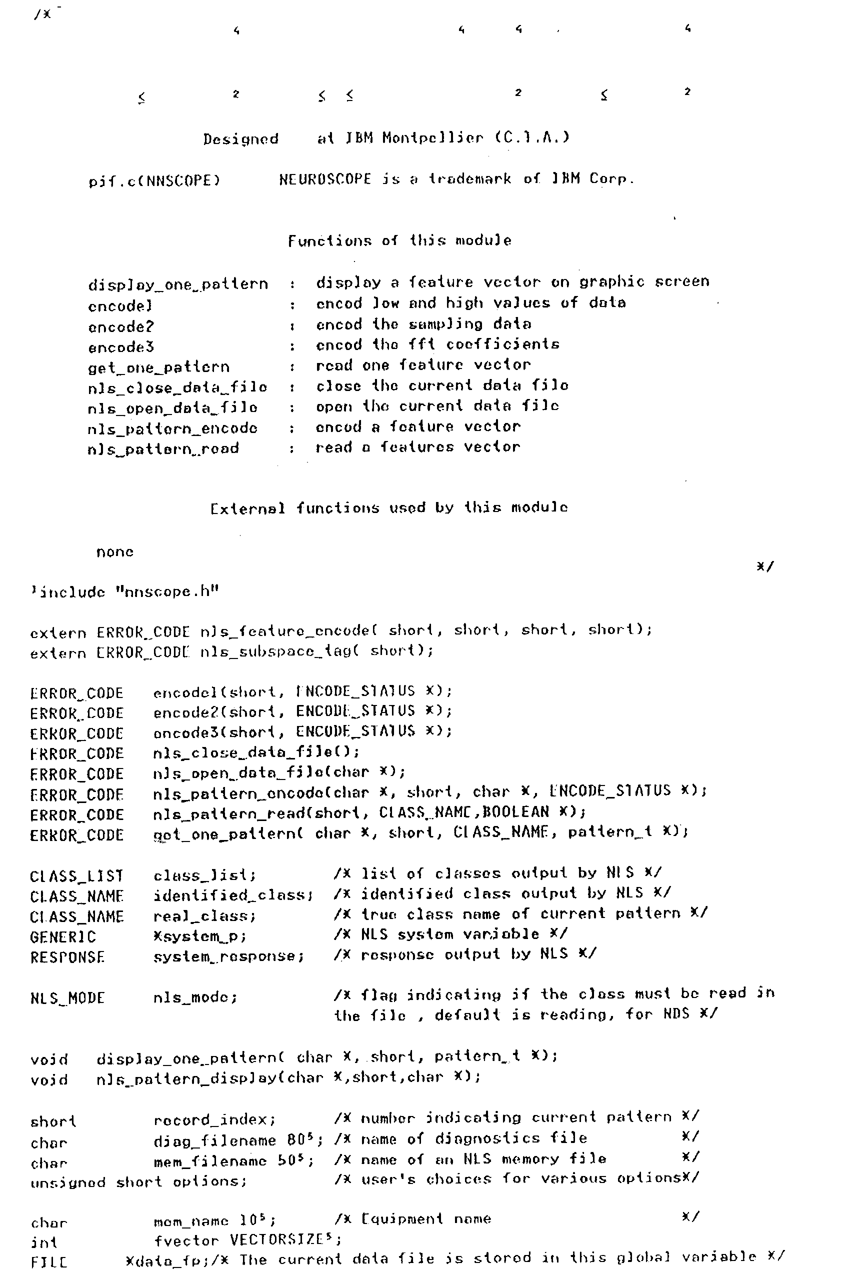

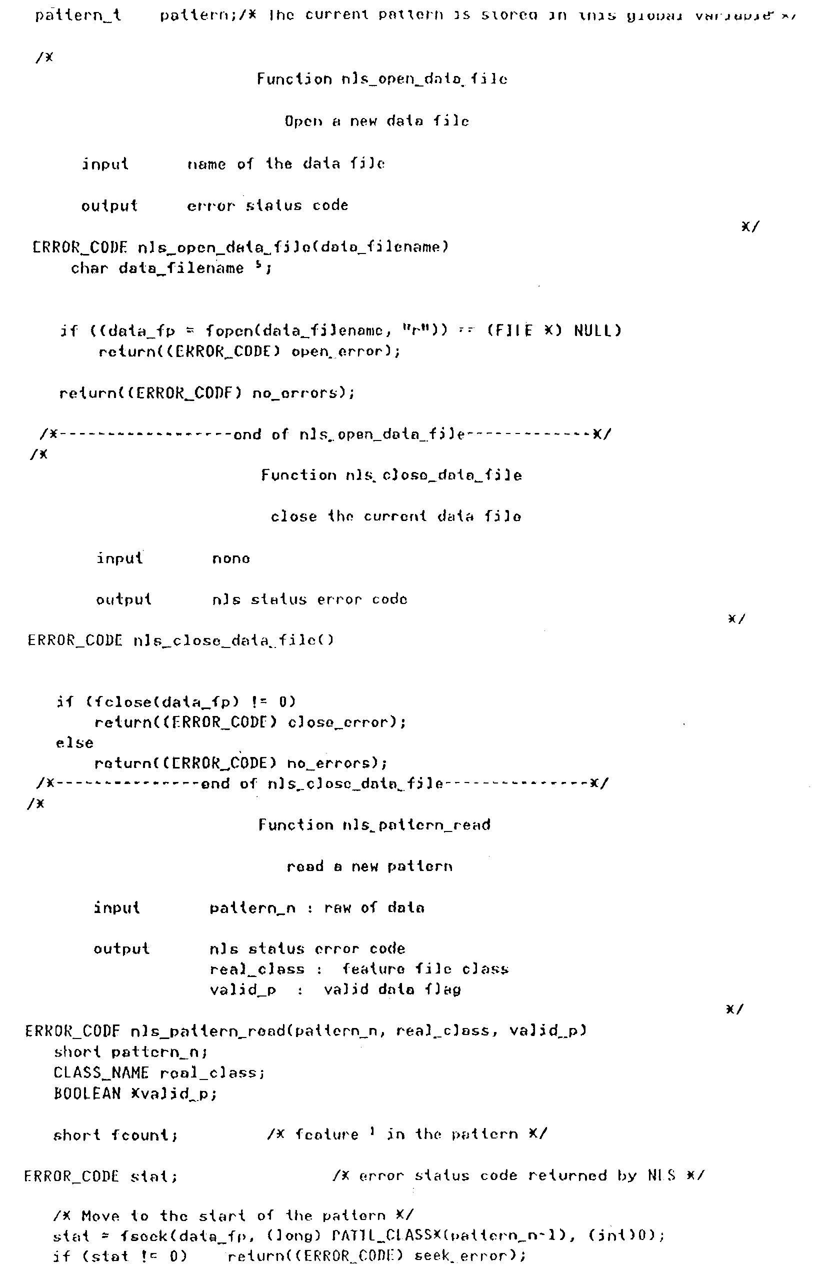

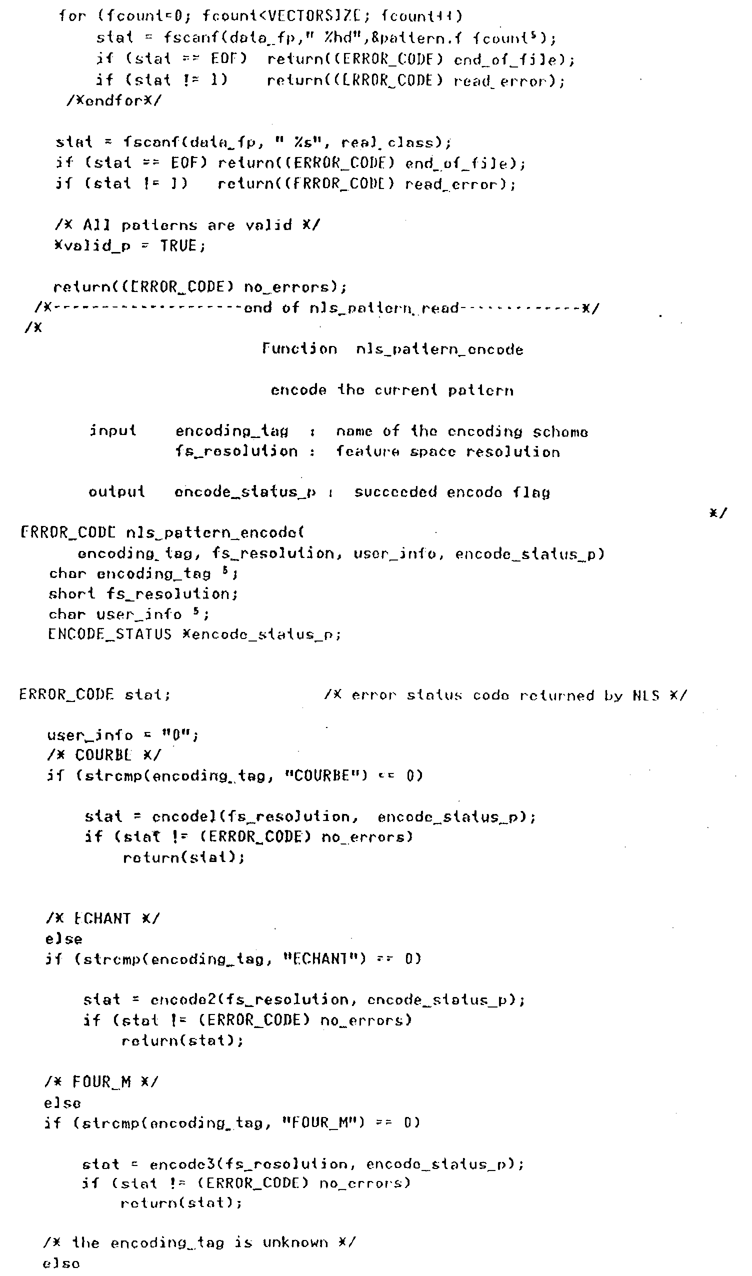

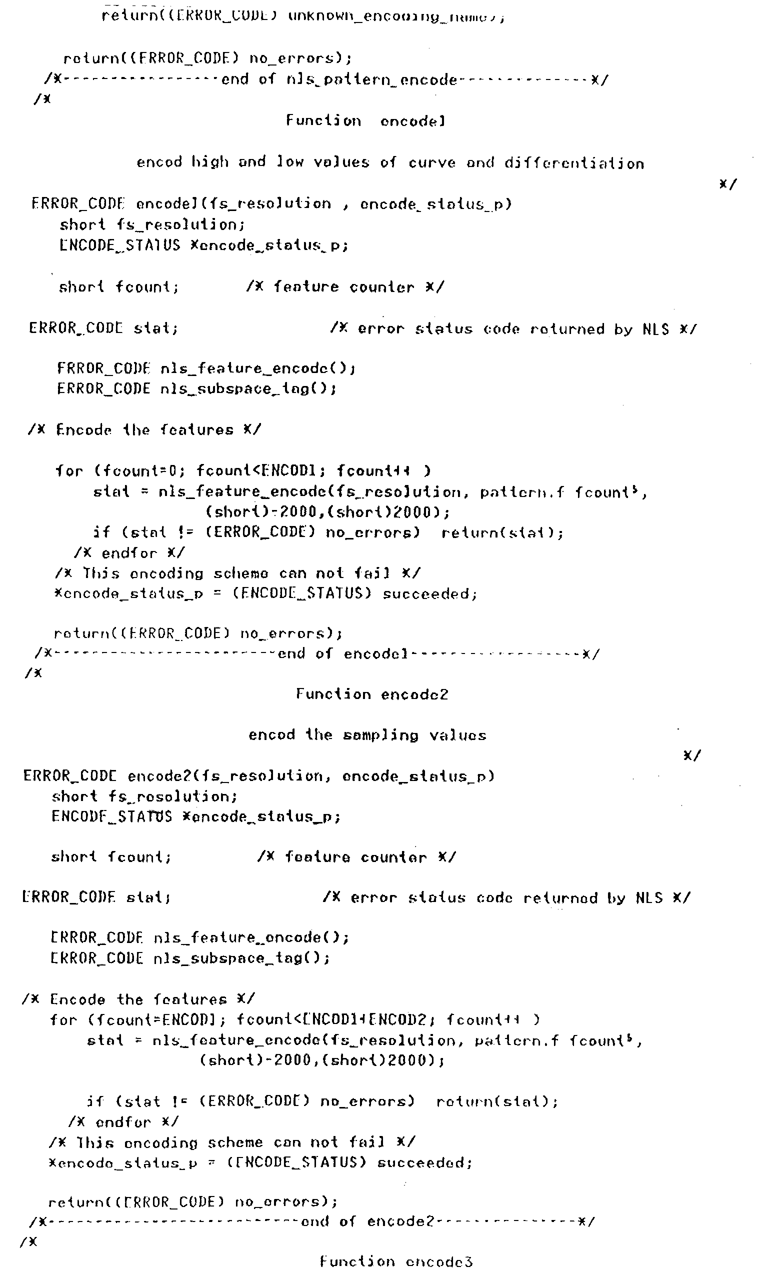

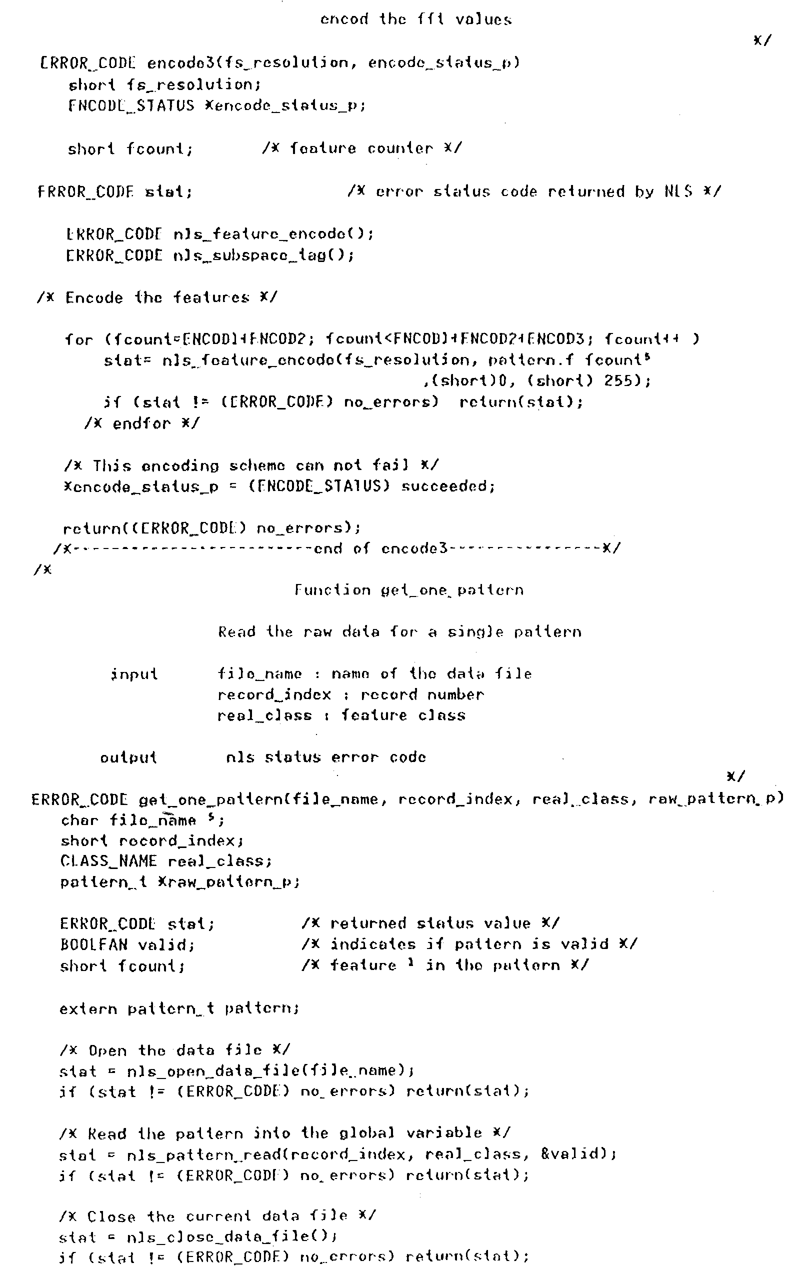

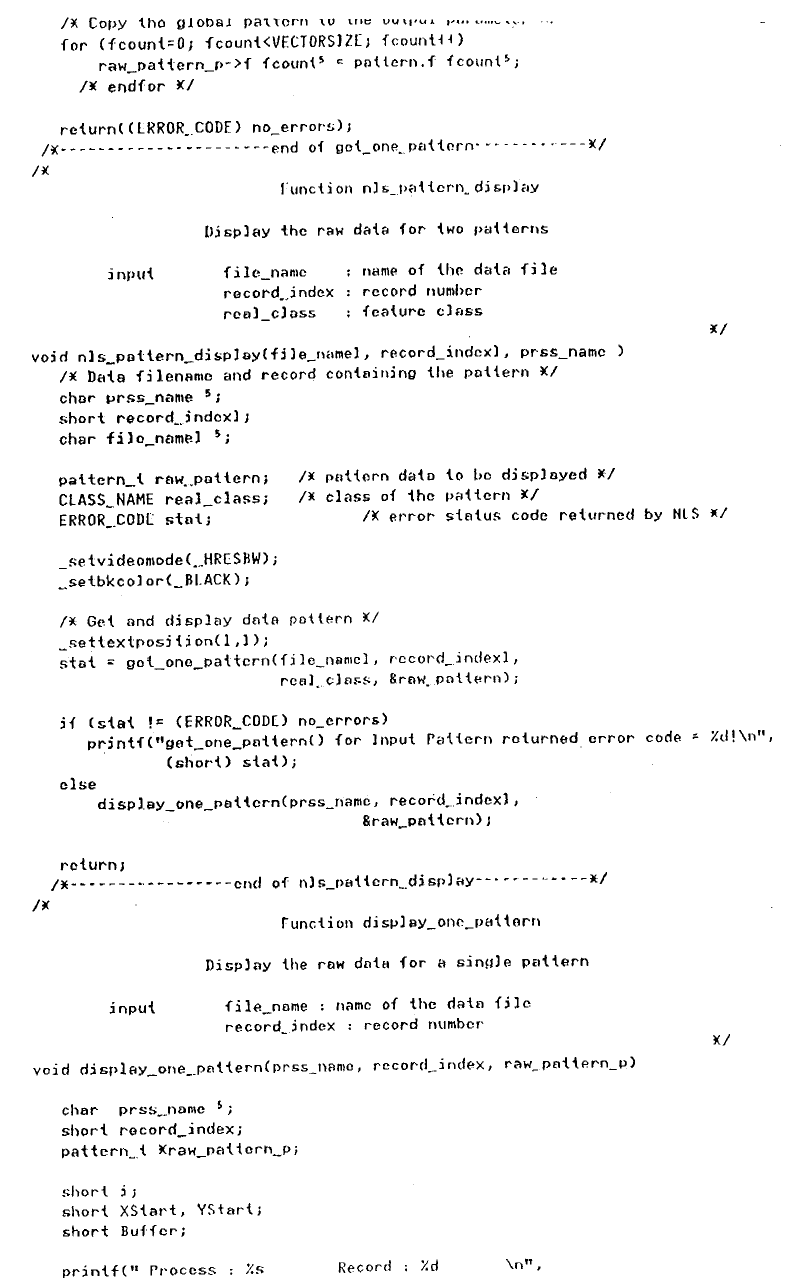

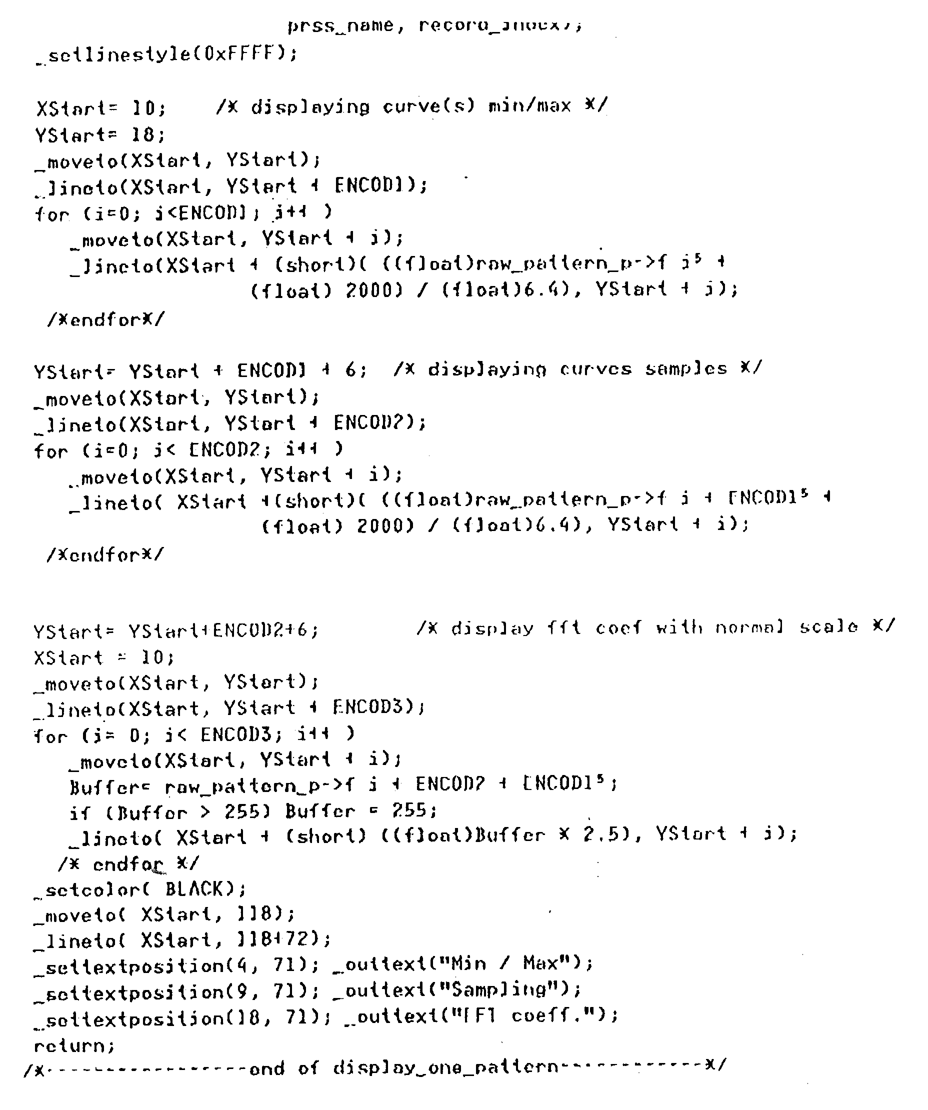

## Claims

1. Method for diagnosing the operating condition of a physical system (1), said system having at least one physical parameter the value of which contains information about the operating condition of said physical system, said method being characterized in that it comprises the steps of :
a) for each of said at least one physical parameter, applying a set of at least one mathematical function representative of the operative condition of the physical system to said at least one physical parameter ;
b) determining a set of classes of values of said at least one mathematical function, each said class of values corresponding to a predetermined operating condition (e.g. GOOD; BAD; UNDETERMINED) of said physical system (1) ;
c) in a learning mode, memorizing said set of classes of values into the memory of a diagnosis system whereby the latter is being taught by way of example the correspondance between said classes of values and said operating conditions ;
d) in a monitoring mode, acquiring over a period of time a set of raw data of said at least one physical parameter and computing vectors (6,7,8) of values of said at least one mathematical function based on said raw data, then supplying said vectors as inputs to said diagnosis system, whereby the latter classifies said values according to said classes and produces a diagnosis of the actual operating condition of the physical system (1).

2. Method according to claim 1, characterized in that it includes the step of displaying a warning message based on said diagnosis of the actual operating condition, said message being used to schedule a maintenance operation of the physical system (1).

3. Method according to claim 1 or 2, wherein said set of at least one mathematical function includes the function consisting in calculating the maximal and minimal values of said set of raw data of said parameter (5), said maximal and minimal values being used to compute vectors of values to be used by the diagnosis system.

4. Method according to claim 1 or 2, wherein said set of at least one mathematical function includes the function consisting in sampling an analog signal representative of the parameter (5), the samples being used to compute vectors of values to be used by the diagnosis system.

5. Method according to claim 1 or 2, wherein said set of at least one mathematical function includes the function consisting in calculating a Fast Fourier Transform (FFT) of the set of raw data of the parameter (5), the coefficients of said FFT being used to compute vectors of values to be used by the diagnosis system.

6. Method according to respective claims 3, 4 and 5, wherein each said vector includes 16, 72 and 72 values respectively.

7. Method according to anyone of the preceding claims, wherein said diagnosis system includes a neural network which is being taught the correspondance between output message classes and input vectors of values, said vectors of values being scaled according to the useful input range of said neural network (4) and applied to its inputs, whereby said neural network generates an output message representative of the operating condition (good; bad; undetermined) of said physical system.

8. Method according to anyone of the preceding claims, wherein during monitoring mode, said diagnosing system generates specific warning messages whenever a vector cannot be classified and prompts a user to provide a manual classification of the physical system's operating condition and memorizes this manual classification, whereby said diagnosing system enriches its knowledge base.

9. System for diagnosing the operating condition of a physical system, said system having at least one physical parameter the value of which contains information about the operating condition of said physical system, said system being characterized in that it includes :
a) sensor means (2) for monitoring a set of physical parameters (5) representative of the operation of said physical system, said sensor means (2) being coupled to analog and/or digital acquisition means for capturing a set of analog and/or digital raw data based on said parameters ;
b) computation means (3) to which said analog and/or digital values are supplied and on which at least one mathematical function is performed, whereby at least one vector (6,7,8) of values representative of the processed raw data is generated ;
c) diagnosis means (4) using said vectors of values in order to generate a diagnosis representative of the operative condition of said physical system.

10. System according to claim 9 wherein said diagnosis means include at least one neural network software (4) to which said vectors are input, said vectors being processed by the neural network so as to generate a classified output message indicative of a diagnosis of the operating condition of the physical system being monitored.

11. System according to claim 10 wherein said neural network is of the Restricted Coulomb Energy type.

12. System according to claim 11, wherein said computation means include a personal computer system comprising data acquisition cards plugged to its data bus, and a central processor and memory where the neural network software (4) operates.

13. System according to claim 12, further including display means connected to said central processor, providing for user interaction with the system and display of the diagnosis output by the neural network software.
